Europäisches Patentamt

European Patent Office

Office européen des brevets

(11) Veröffentlichungsnummer: **0 570 767 A2**

# EUROPÄISCHE PATENTANMELDUNG

(21) Anmeldenummer: **93107276.3**

(22) Anmeldetag: **05.05.93**

(51) Int. Cl.5: **G05F 1/56**

(30) Priorität: **19.05.92 DE 4216521**

(43) Veröffentlichungstag der Anmeldung:
**24.11.93 Patentblatt 93/47**

(84) Benannte Vertragsstaaten:
**DE FR IT NL**

(71) Anmelder: **SIEMENS AKTIENGESELLSCHAFT**
**Wittelsbacherplatz 2**
**D-80333 München(DE)**

(72) Erfinder: **Finsterbusch, Rolf, Dipl.-Ing.**
**An der Schmiede 16**
**O-9081 Chemnitz(DE)**

(54) **Schaltungsanordnung zur Spannungsversorgung von mindestens einer Last.**

(57) Zur Spannungsversorgung von Präzisionsbaugruppen (P) und im niederfrequenten Bereich störenden Verbrauchern (M1 bis Mn), beispielsweise Lüftermotoren, die gemeinsam an eine Präzisionsspannungsquelle angeschlossen sind, ist in den Laststromkreis der Verbraucher (M1 bis Mn) ein Transistor (T) geschaltet, dessen Basisanschluß (B) über einen Spannungsregler (V) mit großer Regelzeitkonstante angesteuert wird. Dadurch ist sichergestellt, daß die durch die Kommutierung der Lüftermotoren (M1 bis Mn) verursachten Spannungsschwankungen nicht fehlerverursachend auf die Präzisionsspannungsversorgung rückwirken.

FIG 2

EP 0 570 767 A2

Wenn Verbraucher, die im niederfrequenten Bereich stark störende Lastschwankungen verursachen, an einer Spannungsquelle betrieben werden, an die gleichzeitig analoge Präzisionsbaugruppen angeschlossen sind, dann treten wegen des endlichen dynamischen Innenwiderstandes der Spannungsquelle Störspannungen auf, die sich ihrerseits auf die analogen Ausgangsspannungen fortpflanzen. Wenn mit diesen Ausgangsspannungen beispielsweise elektrische Antriebe gesteuert werden sollen, können diese Störspannungen zu Fehlern führen.

Solche Lastschwankungen werden beispielsweise von Lüftermotoren verursacht, bei denen aufgrund der elektronischen Kommutierung Stromschwankungen in Höhe des Nennstromes auftreten können. Die Anwendung von klassischen Siebmitteln, z.B., LC-Gliedern, führt wegen des niedrigen Innenwiderstands der Spannungsquelle und der tiefen Störfrequenzen nicht zum Ziel, bzw. erfordert einen unvertretbar hohen Aufwand.

Es ist daher Aufgabe der Erfindung, eine Schaltungsanordnung zu schaffen, bei der sich die Lastschwankungen von an eine Präzisionsspannungsquelle angeschlossenen Verbrauchern nicht fehlerverursachend auf die Präzisionsspannung auswirkt.

Diese Aufgabe wird durch eine Schaltungsanordnung zur Spannungsversorgung von mindestens einer Laststromschwankungen verursachenden Last erreicht, wobei in den Laststromkreis ein Transistor geschaltet ist, dessen Basisanschluß über den Ausgang eines Spannungsreglers angesteuert wird, wobei der Spannungsregler die Lastspannung bezüglich einer Referenzspannung regelt, wobei die Regelzeit des Spannungsreglers wesentlich größer ist als die zeitlichen Abstände der Laststromschwankungen und wobei parallel zur Last ein Kondensator zur Kompensation von resultierenden Lastsparnungsschwankungen geschaltet ist. Mit dieser Schaltungsanordnung wird eine möglichst langsame und kontinuierliche Spannungsregelung der Verbraucher erreicht, wodurch sich die Lastschwankungen nur noch stark reduziert auf den Eingangsstrom der Schaltungsanordnung auswirken. Da die Spannungsschwankungen im Laststromkreis durch den langsam reagierenden Spannungsregler möglicherweise nicht ausreichend kompensiert werden und somit eine fehlerverursachende Rückwirkung auf den Eingangsstromkreis nicht gänzlich ausgeschlossen ist, ist parallel zur Last ein Kondensator zur Kompensation der Lastspannungsschwankungen geschaltet.

Nach einer vorteilhaften Ausbildung der Erfindung wird als Spannungsregler ein Operationsverstärker verwendet, dessen Regelzeit durch eine Beschaltung aus ohmschen Widerständen und Kondensatoren einstellbar ist, wobei ein Eingang des Operationsverstärkers mit der Referenzspannung und der zweite Eingang mit einer Spannung beaufschlagt ist, die von einem parallel zur Last liegenden Spannungsteiler abgegriffen wird. Der Operationsverstärker wird damit als Spannungsregler mit großer Regelzeitkonstante eingesetzt. Im Gegensatz zur herkömmlichen Verwendung von Spannungsreglern, bei der eine möglichst rasche Reaktion auf Spannungsänderungen gewünscht wird, wird mit der RC-Beschaltung des Operationsverstärkers ein integrierendes Verhalten mit einem wirtschaftlich günstigen Bauelement erreicht.

Nach einer weiteren vorteilhaften Ausbildung der Erfindung ist der Eingang des Spannungsreglers mit einer Z-Diode geschaltet, deren zweiter Anschluß im Laststromkreis liegt. Damit kann eine hohe Spannung im Laststromkreis unter Umgehung der integrierenden Beschaltung des Verstärkers direkt an diesen gegeben werden, so daß der Verstärker unmittelbar reagiert und damit die Einschwingzeit beim Zuschalten der Spannungsversorgung verkürzt wird.

Zur Erhöhung der Kurzschlußfestigkeit und zur Begrenzung des Ladestroms des Kondensators, der zur Kompensation der Lastspannungsschwankungen dient, ist es vorteilhaft, den Transistor strombegrenzend zu beschalten.

Wenn im Laststromkreis Verbraucher liegen, die eine rippelarme Spannung benötigen, kann es vorteilhaft sein, einen zusätzlichen Spannungsregler zur Regelung der Lastspannung vorzusehen.

Ein Ausführungsbeispiel der Erfindung wird nachfolgend anhand einer Zeichnung näher beschrieben. Dabei zeigen:

FIG 1    den typischen Stromverlauf eines Kommutatormotors,

FIG 2    eine Schaltungsanordnung zur Spannungsversorgung von Präzisionsbaugruppen und Lüftermotoren,

FIG 3    eine gemäß FIG 2 erweiterte Schaltungsanordnung.

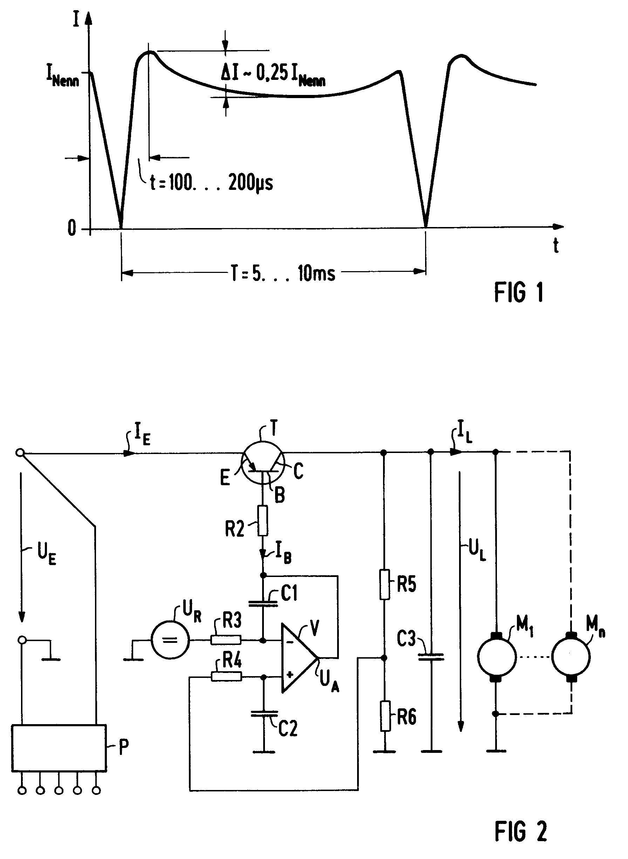

In FIG 1 ist der typische Stromverlauf eines Kommutatormotors, wie er beispielsweise bei Lüftern für Datenverarbeitungsanlagen etc. eingesetzt wird, dargestellt. Aufgrund der elektronischen Kommutierung treten Stromschwankungen in Höhe des Nennstroms auf, die bei herkömmlichen Lüftermotoren je nach Drehzahl eine Periode von $T = 5$ bis 10 ms aufweisen.

FIG 2 zeigt eine Schaltungsanordnung zur Spannungsversorgung von Präzisionsbaugruppen P und von Verbrauchern, die beispielsweise Lüftermotoren M1 bis Mn sein können. Die Präzisionsspannung $U_E$ wird von einer nicht näher gezeigten, herkömmlichen Präzisionsspannungsquelle erzeugt und an eine oder mehrere Präzisionsbaugruppen P gegeben. Diese Präzisionsbaugruppen P können beispielsweise Bauelemente einer Datenverarbeitungsanlage oder einer numerischen Steuerung etc. sein. Gleichzeitig sollen von der Präzisionsspannung $U_E$ auch die Motoren M1 bis Mn von Lüftern versorgt werden, die beispielsweise zur Kühlung der Präzisionsbauelemente P dienen. Zur Regelung der Spannung der Motoren M1 bis Mn ist in den Lüfterstromkreis ein Transistor T geschaltet, dessen Emitteranschluß E mit einem Ausgang der Präzisionsspannungsquelle $U_E$ und dessen Kollektoranschluß C mit den Motoren M1 bis Mn verbunden ist. Der Basisanschluß B des Transistors T ist über einen ohmschen Widerstand R2 mit einem Kondensator C1 verbunden, dessen zweiter Anschluß an den invertierenden Eingang eines Operationsverstärkers V geführt ist. Außerdem ist an denselben Eingang des Operationsverstärkers eine an Masse gelegte Referenzspannungsquelle $U_R$ über einen dritten ohmschen Widerstand R3 angeschlossen. An den nichtinvertierenden ("positiven") Eingang des Operationsverstärkers V ist ein zweiter mit Masse verbundener Kondensator C2 und parallel dazu ein vierter ohmscher Widerstand R4 angeschlossen, dessen zweiter Anschluß mit dem Abgriff eines Spannungsteilers aus den ohmschen Widerständen R5 und R6 verbunden ist, wobei dieser Spannungsteiler parallel zu den Motoren M1 bis Mn liegt. Der Ausgang $U_A$ des Operationsverstärkers V ist auf das Potential zwischen den zweiten ohmschen Widerstand R2 und den ersten Kondensator C1 gelegt. Parallel zu den Motoren M1 bis Mn ist ein dritter Kondensator C2 als Elektrolytkondensator geschaltet. Der als Differenzintegrator geschaltete Operationsverstärker V regelt über seine Ausgangsspannung $U_A$ in Verbindung mit R2 den Basisstrom des Transistors T, der ein Darlington-Transistor sein kann, so daß sich eine Lastspannung $U_L$ gemäß Gleichung 1 einstellt.

$$U_L = U_R(R5 + R6)/R6 \qquad G1.1$$

Wenn nun beispielsweise bedingt durch die Kommutierung der eingeschalteten Motoren M1 bis Mn niederfrequente Laststromänderungen auftreten, kann der Operationsverstärker V diesen aufgrund seiner langen Regelzeit nicht folgen, so daß der Basisstrom $I_B$ nahezu konstant bleibt. Damit stellt der Transistor T für diesen Lastfall eine Stromquelle dar. Aufgrund dieser Konstantstromspeisung führen Laststromänderungen zu niederfrequenten Spannungsänderungen delta $U_L$ (auch als "Spannungsrippel" bezeichnet) der Lastspannung $U_L$, die durch entsprechende Dimensionierung des Kondensators C3 minimiert werden können, wobei mit zunehmender Kapazität des Kondensators C3 sich delta $U_L$ verringert.

Die durch die niederfrequenten Lastspannungsschwankungen verbleibende Eingangsstromänderung delta $I_E$ beträgt bei Vernachlässigung des

Innenwiderstands der Spannungsquelle

$$delta\ I_E = delta\ U_L/R_D \qquad G1.2$$

wobei $R_D$ der differentielle Innenwiderstand delta $U_{CE}$/delta $I_C$ eines mit konstantem Basisstrom betriebenen Transistors ist, der bei Leistungstransistoren im Bereich von 60 bis 100 Ohm liegt. Mit der Schaltung ist also sichergestellt, daß sich niederfrequente Lastschwankungen der Verbraucher M1 bis Mn nicht auf die Präzisionseingangsspannung $U_E$ auswirken, so daß die Schaltung bezüglich der Änderung des Eingangsstromes delta $I_E$ wie ein hochwirksames Filter wirkt.

Die Schaltung erfüllt aber gleichzeitig noch eine zweite Funktion. Wenn sich nämlich die Last durch Zuschalten oder Abschalten einer oder mehrerer Verbrauchern M1 bis Mn ändert, so wird sich zunächst die Spannung $U_L$ im Laststromkreis ändern, worauf der Operationsverstärker V, bedingt durch seine große Regelzeitkonstante, langsam aber kontinuierlich den Basisstrom $I_B$ des Transistors T beeinflußt und damit für eine Anpassung des Strombedarfs an die geänderte Last sorgt. Die dadurch bewirkte Änderung des Eingangsstroms $I_E$ ist so langsam, daß die Präzisionsspannung $U_E$ davon nicht beeinträchtigt wird und somit die konstante Spannungsversorgung der Präzisionsbauelemente P sichergestellt ist.

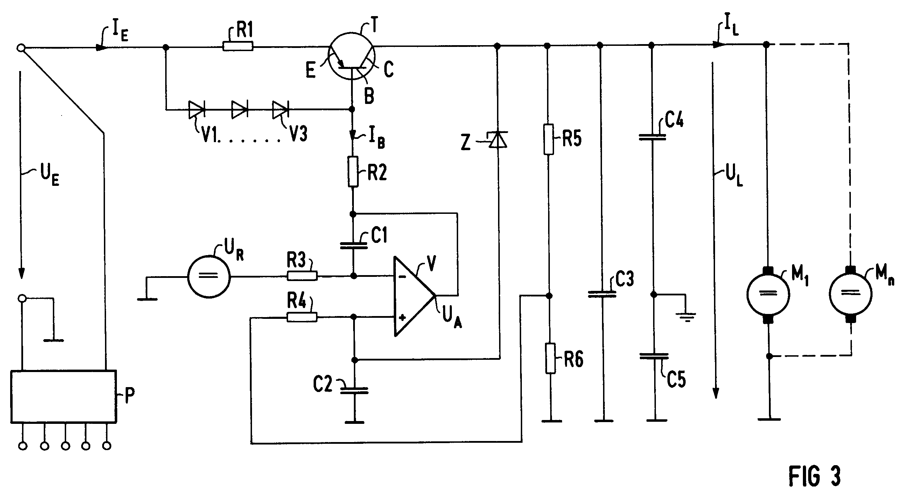

In FIG 3 ist zusätzlich zur Schaltungsanordnung der Transistor T mit einer Strombegrenzungsschaltung aus einem Widerstand R1 und Dioden V1 bis V3 beschaltet. Außerdem ist an den positiven Anschluß des Operationsverstärkers V eine Z-Diode angeschlossen, deren zweiter Anschluß mit der Kollektorleitung C des Transistors T verbunden ist. Weitere Kondensatoren C4 und C5 sind in Serie parallel zu den Motoren M1 bis Mn geschaltet, wobei der Mittelabgriff der beiden Kondensatoren C4, C5 auf Masse gelegt ist.

Die Beschaltung des Transistors T mit dem Widerstand R1 und den Dioden V1 und V3 wirkt beim Einschalten strombegrenzend und als Kurzschlußschutz, da sonst der Elektrolytkondensator C3 beim Einschalten zu viel Strom ziehen würde und damit eventuell die Präzisionsspannungsversorgung $U_E$ überfordern könnte.

Mit der Z-Diode Z deren Zenerspannung geringfügig über der Spannung $U_L$-$U_R$ liegen sollte, erfolgt eine Spannungsbegrenzung während des Einschwingens. Eine zu hohe Spannung $U_L$ wird durch die Z-Diode direkt an den positiven Eingang des Operationsverstärkers V gegeben, der daraufhin sofort die Ausgangsspannung $U_A$ nachregelt.

Die Beschaltung mit den Kondensatoren C4 und C5 dient der Kompensation von hochfrequenten Störungen.

Die Einschwingzeit der Schaltung wird hauptsächlich von den Zeitkonstanten C1 R3 bzw. C2 R4 und dem Teilerverhältnis von R5 zu R6 bestimmt. Die Einschwingzeit sollte größer sein als die 100-fache Zeit der niederfrequenten Lastschwankungen. R5 und R6 sind möglichst niederohmig zu dimensionieren um die Stabilität der Regelung sicherzustellen.

**Patentansprüche**

1. Schaltungsanordnung zur Spannungsversorgung von mindestens einer Laststromschwankungen verursachenden Last, wobei in den Laststromkreis ein Transistor (T) geschaltet ist, dessen Basisanschluß (B) über den Ausgang ($U_A$) eines Spannungsreglers (V) angesteuert wird, wobei der Spannungsregler (V) die Lastspannung ($U_L$) bezüglich einer Referenzspannung ($U_R$) regelt, wobei die Regelzeit des Spannungsreglers (V) wesentlich größer ist als die zeitlichen Abstände der Laststromschwankungen, und wobei parallel zur Last (M1 bis Mn) ein Kondensator (C3) zur Kompensation von resultierenden Lastspannungsschwankungen geschaltet ist.

2. Schaltungsanordnung nach Anspruch 1, wobei als Spannungsregler ein Operationsverstärker (V) verwendet wird, dessen Regelzeit durch eine Beschaltung aus ohmschen Widerständen (R3,R4) und Kondensatoren (C1,C2) einstellbar ist, wobei ein Eingang des Operationsverstärkers (V) mit der Referenzspannung ($U_R$) und der zweite Eingang mit der von einem parallel zur Last liegenden Spannungsteiler (R5,R6) abgegriffenen Spannung beaufschlagt ist.

3. Schaltungsanordnung nach einem der vorstehenden Ansprüche, wobei ein Eingang des Spannungsreglers (V) mit einer Z-Diode (Z) beschaltet ist, deren zweiter Anschluß im Laststromkreis liegt.

4. Schaltungsanordnung nach einem der vorstehenden Ansprüche, wobei der Transistor (T) strombegrenzend beschaltet ist.

5. Schaltungsanordnung nach einem der vorstehenden Ansprüche, wobei zur Regelung der Lastspannung ($U_L$) ein zusätzlicher Spannungsregler vorgesehen ist.

FIG 1

FIG 2

FIG 3